# EUROPEAN PATENT APPLICATION

(11) **EP 4 782 388 A1**
(43) Date of publication of application: **29.07.2026**
(21) Application number: 25154193.4
(22) Date of filing: 27.01.2025
(51) Int. Cl.: B66F 9/075, B62B 5/00, B66F 9/24

(54) **AN INDUSTRIAL TRUCK**

(71) Applicant: Toyota Material Handling Manufacturing Sweden AB, 595 81 Mjölby (SE)
(72) Inventor: STAAF, Ola, 595 52 Mjölby (SE); NAJAFI, Mahdi, 582 32 Linköping (SE)
(74) Representative: Zacco Sweden AB

(57) **Abstract**

An industrial truck, comprising a chassis (1), a drive wheel (2) for the propulsion of the industrial truck, a drive device (3), connected to the drive wheel (2) for delivering a torque to the drive wheel (2), a brake device (4) for applying a braking force on the drive wheel (2), a wheel speed sensor (5) for measuring the rotational speed of the drive wheel (2), an accelerometer (6) for measuring the acceleration of the industrial truck, and a control unit (7) operatively connected to the wheel speed sensor (5), the accelerometer (6), the brake device (4) and the drive device (3), and configured to control the operation of the brake device (4) and the drive device (3) on basis of output from the wheel speed sensor (5) and the accelerometer (6). The control unit (7) is configured to derive an acceleration or deceleration of the rotational speed of the drive wheel (2) on basis of the output of the wheel speed sensor (5) and to calculate an assumed acceleration or deceleration of the industrial truck on basis of the derived acceleration or deceleration of the drive wheel (2), compare the assumed acceleration or deceleration of industrial truck with the output from the accelerometer (6), and to control the braking force applied by the brake device (4) on the drive wheel (2) and the torque delivered by the drive device (3) to the drive wheel (2) on basis of said comparison.

## Description

### TECHNICAL FIELD

The present invention relates to an industrial truck, comprising a chassis, a drive wheel for the propulsion of the industrial truck, a drive device, connected to the drive wheel for delivering a torque to the drive wheel, and a brake device for applying a braking force on the drive wheel.

### BACKGROUND

The traction wheel of an industrial forklift truck may lose traction in obverse conditions, including floors that are dirty, wet, icy, snowy, oily, etc., or when its drive wheel load is reduced. This will cause the wheel to be unable to transmit the force needed to accelerate and/or decelerate the truck as requested, resulting in the wheel spinning or gliding on the floor. For obvious reasons it is desirable to avoid such spinning or gliding.

EP1225078B1 discloses an industrial truck comprising a chassis, a drive wheel for the propulsion of the industrial truck, a drive device, connected to the drive wheel, for delivering a torque to the drive wheel, and a brake device for applying a braking force on the drive wheel, a wheel speed sensor for measuring the rotational speed of the drive wheel, an accelerometer for measuring the acceleration of the industrial truck, and a control unit operatively connected to the wheel speed sensor, to the accelerometer, to the brake device and to the drive device, and configured to control the operation of the brake device and the drive device on basis of output from the wheel speed sensor and the accelerometer. The control unit is configured to calculate (presumably means of integration) a speed of the truck on basis of the output from the accelerometer and to compare the calculated speed with the speed measured by the wheel speed sensor.

Calculating a speed from an acceleration requires that the speed is continuously calculated and that there is a knowledge of the actual speed at the starting point of the measurement. If there is a temporary loss of functionality of the accelerometer or the control unit, such that there is a risk that there is no longer any correct starting point (initial speed) for the derivation to be based on, the calculated speed may not be correct.

### SUMMARY

It is thus an object of the present invention to present an industrial truck which is configured to control the operation of a brake device and a drive device of the truck on basis of output from a wheel speed sensor and an accelerometer, wherein said control of the operation of the brake device and the drive device is more reliable and less sensitive to temporary loss of functionality of the accelerometer or the control unit than the closes prior art. It is also an object to present a solution which requires few and technically relatively uncomplicated and reliable devices in order to achieve stable and reliable functionality, in terms of preventing spinning and locking of the drive wheel.

The object to the invention is achieved by mean of an industrial truck, comprising
- a chassis,
- a drive wheel for the propulsion of the industrial truck,
- a drive device, connected to the drive wheel for delivering a torque to the drive wheel,
- a brake device for applying a braking force on the drive wheel,
- a wheel speed sensor for measuring the rotational speed of the drive wheel,
- an accelerometer for measuring the acceleration of the industrial truck, and
- a control unit operatively connected to the wheel speed sensor, the accelerometer, the brake device and the drive device, and configured to control the operation of the brake device and the drive device on basis of output from the wheel speed sensor and the accelerometer, said industrial truck being **characterised in** that the control unit is configured to
- derive an acceleration or deceleration of the rotational speed of the drive wheel on basis of the output of the wheel speed sensor and to calculate an assumed acceleration or deceleration of the industrial truck on basis of the derived acceleration or deceleration of the drive wheel,
- compare the assumed acceleration or deceleration of industrial truck with the output from the accelerometer, and
- control the braking force applied by the brake device on the drive wheel and the torque delivered by the drive device to the drive wheel on basis of said comparison.

By comparing the actual acceleration or deceleration measured by the accelerometer with an acceleration or deceleration derived from the measured rotational speed of the drive wheel, an reliable comparison is achieved, in which temporary loss of functionality of the accelerometer or the control unit does is not crucial for the correctness.

According to some embodiments, the control unit is configured to control the torque delivered by the drive device to the drive wheel such that a difference between derived assumed acceleration of the industrial truck and the acceleration measured by the accelerometer is below a predetermined threshold value.

According to some embodiments, the control unit is configured to control the torque delivered by the drive device to the drive wheel such that the derived assumed acceleration of the industrial truck and the acceleration measured by the accelerometer are equal.

According to some embodiments, the control unit is configured to control the braking force applied by the brake device on the drive wheel such that a difference between a derived assumed deceleration of the industrial truck and a deceleration of the industrial truck measured by the accelerometer is below a predetermined threshold value.

According to some embodiments, the control unit is configured to control the braking force applied by the brake device on the drive wheel such that a derived assumed deceleration of the industrial truck and a deceleration of the industrial truck measured by the accelerometer are equal.

According to some embodiments, the industrial truck further comprises a gyro for measuring an angular velocity of the truck in relation to a horizontal plane, wherein the control unit is operatively connected to the gyro and configured to determine an angle between a centre plane of the truck and horizontal plane on basis of the output from the gyro and the output from the accelerometer to execute the control of the braking force applied by the brake device on the drive wheel and the control of the torque delivered by the drive device to the drive wheel on basis of the output from the wheel speed sensor and the accelerometer respectively provided that the angle between said centre plane and the horizontal plane is below a predetermined threshold value. Preferably, said centre plane is parallel to a plane on which the truck is standing.

According to some embodiments, the control unit is configured not to perform the control of the drive device and the brake device on basis of the comparison when said angle is above said threshold value. The calculation of the angle may be done by means of Kalman filtering.

According to some embodiments, the control unit is configured to take the calculated angle into consideration when said angle is above the predetermined threshold value and adapt the control of the brake device and the drive device to the angle when the angle is above said threshold value.

According to some embodiments, the industrial truck further comprises a wheel steering angle sensor for sensing the steering angle of the drive wheel, wherein the control unit is operatively connected to the wheel steering angle sensor and configured to execute the control of the braking force applied by the brake device on the drive wheel and the control of the torque delivered by the drive device to the drive wheel on basis of the output from the wheel speed sensor and the accelerometer respectively provided that the wheel steering angle is below a predetermined threshold value.

According to some embodiments, the control unit is configured not to perform the control of the drive device on basis of the comparison if the steering angle is above said threshold value.

According to some embodiments, the control unit is configured to take the calculated steering angle into consideration when said steering angle is above the predetermined threshold value and adapt the control of the brake device and the drive device to the angle when the angle is above said threshold value.

According to some embodiments, the drive device and the brake device are comprised by an electric motor, and wherein the control unit comprises a motor control device configured to control an electric current delivered from an electric power source to the electric motor and thereby to control the torque or braking force delivered by the electric motor to the drive wheel.

### BRIEF DESCRIPTION OF THE DRAWINGS

An embodiment of an industrial truck according to the present invention will now be disclosed with reference to the annexed drawing, on which
Fig. 1 is a schematic elevated representation of parts of an industrial truck according to the present invention, and
Fig. 2 is elevated side view of a the industrial truck shown in fig. 1

### DETAILED DESCRIPTION

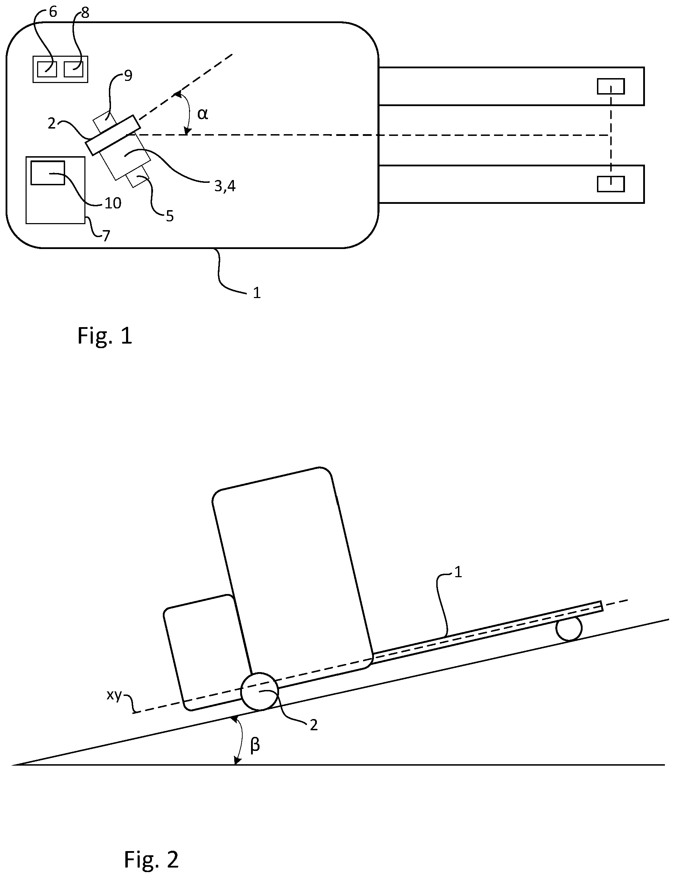

Figs. 1 and 2 shows an industrial truck, comprising a chassis 1, a drive wheel 2 for the propulsion of the industrial truck, and a drive device 3, connected to the drive wheel 2 for delivering a torque to the drive wheel 2. The truck further comprises a brake device 4 for applying a braking force on the drive wheel 2, a wheel speed sensor 5 for measuring the rotational speed of the drive wheel 2, and an accelerometer 6 for measuring the acceleration of the industrial truck. The drive device 3 and the brake device 4 are comprised by an electric motor.

A control unit 7 is operatively connected to the wheel speed sensor 5, the accelerometer 6, the brake device 4 and the drive device 3, and configured to control the operation of the brake device 4 and the drive device 3 on basis of output from the wheel speed sensor 5 and the accelerometer 6. The control unit 7 comprises a motor control device 10 configured to control an electric current delivered from an electric power source, such as an electric battery, to the electric motor and thereby to control the torque or braking force delivered by the electric motor 3, 4 to the drive wheel 2

The control unit 7 is configured to derive an acceleration or deceleration of the rotational speed of the drive wheel 2 on basis of the output of the wheel speed sensor 5 and to calculate an assumed acceleration or deceleration of the industrial truck on basis of the derived acceleration or deceleration of the drive wheel 2. Furthermore, the control unit 7 is configured to compare the assumed acceleration or deceleration of industrial truck with the output from the accelerometer 6, and to control the braking force applied by the brake device 4 on the drive wheel 2 and the torque delivered by the drive device 3 to the drive wheel 2 on basis of said comparison.

The control unit 7 is configured to control the torque delivered by the drive device 3 to the drive wheel 2 such that a difference between the derived acceleration of the industrial truck and the acceleration measured by the accelerometer 6 is below a predetermined threshold value. More precisely, the control unit 7 is configured to control the torque delivered by the drive device 3 to the drive wheel 2 such that the derived assumed acceleration of the industrial truck and the acceleration measured by the accelerometer 6 are equal.

Further, the control unit 7 is configured to control the braking force applied by the brake device 4 on the drive wheel 2 such that a difference between a derived assumed deceleration of the industrial truck and a deceleration of the industrial truck measured by the accelerometer 6 is below a predetermined threshold value. More precisely, the control unit 7 is configured to control the braking force applied by the brake device 4 on the drive wheel 2 such that a derived assumed deceleration of the industrial truck and a deceleration of the industrial truck measured by the accelerometer 6 are equal.

The industrial truck further comprises a gyro 8 for measuring an angular velocity of the truck in relation to a horizontal plane. The control unit 7 is operatively connected to the gyro 8 and configured to determine an angle β between a centre plane xy of the truck and horizontal plane on basis of the output from the gyro 8 and the accelerometer 6 and to execute the control of the braking force applied by the brake device 4 on the drive wheel 2 and the control of the torque delivered by the drive device 3 to the drive wheel 2 on basis of the output from the wheel speed sensor 5 and the accelerometer 6 respectively provided that the angle β between said centre plane xy and the horizontal plane is below a predetermined threshold value. Said centre plane xy is parallel to a plane on which the truck is standing.

According to one embodiment the control unit 7 is configured not to perform said control of the drive device 3 and the brake device 4 on basis of the comparison when said angle β between the centre plane of the truck and the horizontal plane is above said threshold value. In other words, the control is turned off if the angle is above said threshold value.

According to another embodiment, the control unit 7 is configured to take the calculated angle β into consideration when said angle β is above the predetermined threshold value and to adapt the control of the brake device 4 and the drive device 3 to the angle β when the angle β is above said threshold value. In other words, the control remains but is modified when the angle is above said threshold value.

The gyro 8 and the accelerometer 6 may be comprised by a so called Inertial Measurement Unit (IMU).

The industrial truck further comprises a wheel steering angle sensor 9 for sensing the steering angle α of the drive wheel 2, wherein the control unit 7 is operatively connected to the wheel steering angle sensor 9 and configured to execute the control of the braking force applied by the brake device 4 on the drive wheel 2 and the control of the torque delivered by the drive device 3 to the drive wheel 2 on basis of the output from the wheel speed sensor 5 and the accelerometer 6 respectively provided that the wheel steering angle α is below a predetermined threshold value.

According to one embodiment, the control unit 7 is configured not to perform the control of the drive device 3 and the brake device 4 on basis of the comparison if the steering angle α is above said threshold value. In other words, the control is turned off if the steering angle α is above said threshold value.

According to another embodiment, the control unit 7 is configured to take the calculated steering angle α into consideration when said steering angle α is above the predetermined threshold value and to adapt the control of the brake device and the drive device to the steering angle α when the steering angle α is above said threshold value. In other words, the control remains but is modified when the steering angle α is above said threshold value.

The drive device 3 and the brake device 4 are comprised by an electric motor, and wherein the control unit 7 comprises a motor control device 10 configured to control an electric current delivered from an electric power source to the electric motor and thereby to control the torque or braking force delivered by the electric motor to the drive wheel 2.

## Claims

1. An industrial truck, comprising
- a chassis (1),
- a drive wheel (2) for the propulsion of the industrial truck,
- a drive device (3), connected to the drive wheel (2) for delivering a torque to the drive wheel (2),
- a brake device (4) for applying a braking force on the drive wheel (2),
- a wheel speed sensor (5) for measuring the rotational speed of the drive wheel (2),
- an accelerometer (6) for measuring the acceleration of the industrial truck, and
- a control unit (7) operatively connected to the wheel speed sensor (5), the accelerometer (6), the brake device (4) and the drive device (3), and configured to control the operation of the brake device (4) and the drive device (3) on basis of output from the wheel speed sensor (5) and the accelerometer (6), said industrial truck being **characterised in that** the control unit (7) is configured to
- derive an acceleration or deceleration of the rotational speed of the drive wheel (2) on basis of the output of the wheel speed sensor (5) and to calculate an assumed acceleration or deceleration of the industrial truck on basis of the derived acceleration or deceleration of the drive wheel (2),
- compare the assumed acceleration or deceleration of industrial truck with the output from the accelerometer (6), and
- control the braking force applied by the brake device (4) on the drive wheel (2) and the torque delivered by the drive device (3) to the drive wheel (2) on basis of said comparison.

2. An industrial truck according to claim 1, **wherein** the control unit (7) is configured to control the torque delivered by the drive device (3) to the drive wheel (2) such that a difference between derived assumed acceleration of the industrial truck and the acceleration measured by the accelerometer (6) is below a predetermined threshold value.

3. An industrial truck according to claim 1, **wherein** the control unit (7) is configured to control the torque delivered by the drive device (3) to the drive wheel (2) such that the derived assumed acceleration of the industrial truck and the acceleration measured by the accelerometer (6) are equal.

4. An industrial truck according to any one of claims 1-3, **wherein** the control unit (7) is configured to control the braking force applied by the brake device (4) on the drive wheel (2) such that a difference between a derived assumed deceleration of the industrial truck and a deceleration of the industrial truck measured by the accelerometer (6) is below a predetermined threshold value.

5. An industrial truck according to any one of claims 1-3, **wherein** the control unit (7) is configured to control the braking force applied by the brake device (4) on the drive wheel (2) such that a derived assumed deceleration of the industrial truck and a deceleration of the industrial truck measured by the accelerometer (6) are equal.

6. An industrial truck according to any one of claims 1-5, further comprising a gyro (8) for measuring an angular velocity of the truck in relation to a horizontal plane, wherein the control unit (7) is operatively connected to the gyro (8) and configured to determine an angle β between a centre plane (xy) of the truck and horizontal plane on basis of the output from the gyro (8) and the output from the accelerometer and to execute the control of the braking force applied by the brake device (4) on the drive wheel (2) and the control of the torque delivered by the drive device (3) to the drive wheel (2) on basis of the output from the wheel speed sensor (5) and the accelerometer (6) respectively provided that the angle β between said centre plane (xy) and the horizontal plane is below a predetermined threshold value.

7. An industrial truck according to claim 6, wherein the control unit (7) is configured not to perform said control of the drive device (3) and the brake device (4) on basis of the comparison when said angle β between the centre plane of the truck and the horizontal plane is above said threshold value.

8. An industrial truck according to claim 6, wherein the control unit (7) is configured to take the calculated angle β into consideration when said angle β is above the predetermined threshold value and to adapt the control of the brake device (4) and the drive device (3) to the angle β when the angle β is above said threshold value.

9. An industrial truck according to any one of claims 1-8, further comprising a wheel steering angle sensor (9) for sensing the steering angle α of the drive wheel (2), wherein the control unit (7) is operatively connected to the wheel steering angle sensor (9) and configured to execute the control of the braking force applied by the brake device (4) on the drive wheel (2) and the control of the torque delivered by the drive device (3) to the drive wheel (2) on basis of the output from the wheel speed sensor (5) and the accelerometer (6) respectively provided that the wheel steering angle α is below a predetermined threshold value.

10. An industrial truck according to claim 9, wherein the control unit (7) is configured not to perform the control of the drive device (3) and the brake device (4) on basis of the comparison if the steering angle α is above said threshold value.

11. An industrial truck according to claim 9, wherein the control unit (7) is configured to take the calculated steering angle α into consideration when said steering angle is above the predetermined threshold value and to adapt the control of the brake device and the drive device to the steering angle α when the steering angle α is above said threshold value.

12. An industrial truck according to any one of claims 1-11, **wherein** the drive device (3) and the brake device (4) are comprised by an electric motor, and wherein the control unit (7) comprises a motor control device (10) configured to control an electric current delivered from an electric power source to the electric motor and thereby to control the torque or braking force delivered by the electric motor to the drive wheel (2).
